Europäisches Patentamt

(19) European Patent Office

Office européen des brevets

(11) Publication number: **0 085 195**

**A1**

(12) # EUROPEAN PATENT APPLICATION

(21) Application number: **82200104.6**

(22) Date of filing: **28.01.82**

(51) Int. Cl.³: **G 01 L 1/22**

(43) Date of publication of application:
**10.08.83 Bulletin 83/32**

(84) Designated Contracting States:
**AT DE FR GB IT NL**

(71) Applicant: **Maatschappij Van Berkel's Patent N.V.**
**Postbus 20**
**NL-2260 AA Leidschendam(NL)**

(72) Inventor: **de Jong, J.C.**
**Melis Stokelaan 1552**
**2541 ET The Hague(NL)**

(74) Representative: **Kooy, Leendert Willem et al,**
**OCTROOIBUREAU VRIESENDORP & GAADE P.O. Box**
**266**
**NL-2501 AW The Hague(NL)**

(54) **Method of applying a strain gauge and assembly manufactured accordingly.**

(57) A method of applying a strain gauge onto a surface of a metal body (1) comprising the step of covering said strain gauge (3) in situ with a sealing device wherein steps to make up said sealing device comprise applying a bonding layer of a nitrile rubber (7) and then pressing a thin film of a butyl rubber (12) onto said bonding layer.

An assembly for measuring strain comprising a strain gauge applied by said method.

FIG. 1

EP 0 085 195 A1

-1-

Method of applying a strain gauge and assembly manufactured accordingly.

The invention relates to a method of applying a strain gauge onto a surface of a metal body to be stressed, the strain gauge having insulated conductors extending therefrom, the method comprising the steps of

- finishing an appropriate area of the said surface for spaciously accomodating the said strain gauge,
- cleaning said finished area,
- cementing within said finished area the said strain gauge onto the metal body surface,
- covering the said strain gauge and a proximal part of each of the insulated conductors with a sealing device.

The invention further relates to an assembly for measuring strain in a surface area of metal comprising a strain gauge cemented to the metal at said area, said strain gauge comprising a set of insulated electrical conductors extending therefrom and a sealing device covering the strain gauge, the proximal parts of the insulated electrical conductors and a portion of the finished metal surface area adjacent to and enclosing the said strain gauge, said sealing device being bonded to said surface area portion, the electrical conductors extending through said sealing device.

A similar method and assembly implement a protection of a strain gauge in situ. A protective method and an assembly manufactured according to said protection method are known in accordance with U.S. patent 3 089 107 providing for protection against wear and shearing stress in addition to a moisture seal. The metal body. contemplated in this prior art disclosure is a submerged installation, e.g. the hull of a ship, and of considerable stiffness.

In a different environment the utilization of strain gauges equally appears to be hampered by penetrating moisture as is the case with load sensitive elements in load cells being used in weighing devices. A load sensitive element comprises one or more zones, wherein deflection due to loading is monitored by strain gauges being aptly connected to the surface of the said element. When it is required to have the drift of a weighing device confined within a range of 300 parts per million it appears to be unsatisfactory to use strain gauges e.g. having an epoxy backing. Epoxy resin backings are normally preferred because of their characteristic indifference for penetrating moisture. However, under these circumstances the swelling of the epoxy resin backing, as a result of penetrating moisture, consumes a substantial portion of the drift being allowable. Contemplating the prior art moisture protection device, however, raised a further problem. The protective assembly should not interfere with the pliability of the sensitive zones of the load sensitive element. These zones in fact have a substantially lower level of stiffness than a ship's hull or the skin of any other submerged body.

The invention provides a solution for the problem to provide a moisture proof casing for a strain gauge of the type specified in the preamble which is pliable to such an extent that the sensitivity and the accuracy of a load sensitive element in a load cell remains unimpaired.

An advantage offered by the invention is that it provides a durable sealing device, not shortening the life of a weighing device comprising a load cell in which the strain gauges are sealed accordingly.

One specific embodiment of the invention is described in detail below with reference to a drawing in which

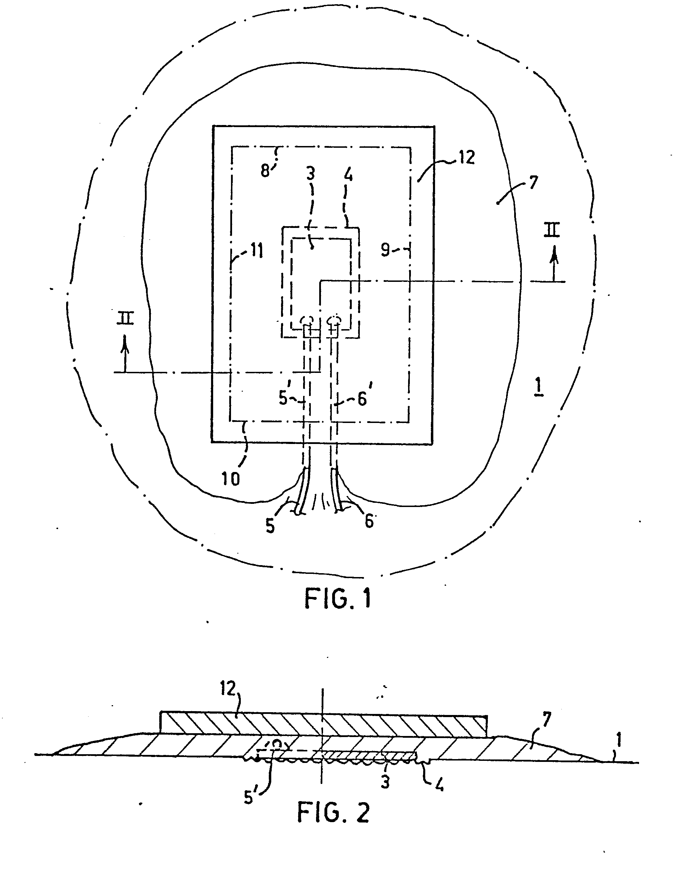

Fig. 1 is a plan view of a surface of a load sensitive element carrying a strain gauge assembly according to the invention.

Fig. 2 is a view of a section of an assembly according to the invention following II-II in figure 1.

The figures show a mounted strain gauge assembly for load-sensitive elements comprising on a surface 1 of an element body 2 a strain gauge 3 cemented within a grit blasted portion 4 of a finished area of said surface. This area portion 4 is of a slightly wider size than the strain gauge 3. Two lead wires 5, 6 extend from the strain gauge. The proximal parts 5', 6' of these lead wires and the strain gauge 3 itself are covered by a thin layer 7 of a nitrile rubber being applied by brushing a nitrile-rubber solution in a volatile solvent over the strain gauge, the proximal part 5', 6' and a portion of the surface area after thoroughly cleaning same. The said surface area portion extends across imaginary border lines 8, 9, 10 and 11 enclosing an area of at least nine times the area of the strain gauge 3, thus extending from said strain gauge over at least its corresponding width and length. A butyl rubber film 12 is applied onto the dried thin layer 7 by pressing, covering at least the area enclosed by the border lines 8, 9, 10 and 11. The thin layer 7 is amply applied so that the film 12 is separated from the surface 1 by the layer 7 over its entire length and width.

The lead wires 5, 6 emerge from the thin layer 7 outside the film 12.

The nitrile-rubber used in a successful example of the above embodiment was an M-Coat BT air-drying nitrile-rubber coating manufactured by Micro Measurements, U.S.A. The dry layer had a thickness of about 30 /um. The butyl-rubber film was tooled from M-coat F butyl-rubber sheet material from the same manufacturer and being rolled to a thickness of 0.8 mm. The surface finish of the aluminum body in the finished area off the actual location of the stain gauge amounted in the example to a roughness of about 20 Ru. Grit blasting the area for conventionally cementing the strain gauge virtually doubled the roughness.

– 1 –

CLAIMS

1. A method of applying a strain gauge onto a surface of a metal body to be stressed, the strain gauge having insulated conductors extending therefrom, the method comprising the steps of
- finishing an appropriate area of the said surface for spaciously accomodating the said strain gauge,
- cleaning said finished area,
- cementing within said finished area the said strain gauge onto the metal body surface,
- covering the said strain gauge and a proximal part of each of the insulated conductors with a sealing device,
characterized in that
steps to make up said sealing device in situ comprise
- applying a thin, pliable and durable bonding layer of a moisture barring nitrile rubber upon the strain gauge, the said proximal parts of the insulated conductors and a portion of the finished area adjacent to and surrounding the said strain gauge and extending over at least the corresponding width and length of the said strain gauge; and
- pressing a thin film of a soft, pliable and durable sealing layer of a moisture barring butyl-rubber onto the said bonding layer covering at least the said portion of the finished area.

2. A method according to claim 1, characterized in that the metal of the metal body is selected from aluminum alloy materials for constructing aircraft.

3. A method according to claim 1, characterized in that the strain gauge backing is an epoxy resin film.

4. A method according to claim 1, characterized by the additional step of grit blasting the central portion of the finished area for locating and cementing the strain gauge.

5. An assembly for measuring strain in a surface area of metal comprising a strain gauge cemented to the metal at said area, said strain gauge comprising a set of insulated electrical conductors extending therefrom and a sealing device covering the strain gauge, the proximal parts of the insulated electrical conductors and a portion of the finished metal surface area adjacent to and enclosing the said strain gauge, said sealing device being bonded to said surface area portion, the electrical conductors extending through said sealing device, characterized in that the said sealing device comprises a thin bonding layer of a pliable and durable moisture barring nitrile-rubber and a pliable and durable moisture barring butyl-rubber film, said butyl-rubber film bonded to the strain gauge and to the said surface portions by the nitrile-rubber bonding layer, the electrical conductors extending through the nitrile-rubber bonding layer underneath said film, said surface portions extending from the strain gauge over at least the corresponding length and width dimension of the strain gauge respectively.

6. An assembly according to claim 5, characterized in that the metal of the metal body is selected from aluminum alloy materials for the construction of aircraft.

7. An assembly according to claim 5, characterized in that the strain gauge backing is an epoxy resin film.

8. An assembly according to claim 5, characterized in that the central portion of the said metal surface for locating said strain gauge has a lower degree of finishing than a substantial part of the said surface area portion.

9. A load cell comprising an aluminum double beam load sensing element of the parallellogram-type carrying a set of strain gauge, each gauge being attached to a finished surface of said element at an appropriate location to monitor load deformation characterized in that each strain gauge is comprised in an assembly according to claims 5, 6, 7 or 8.

JEV/eb/LvdM

FIG. 1

FIG. 2

European Patent
Office

EUROPEAN SEARCH REPORT

0085195

Application number

EP 82 20 0104

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 475 712 (B.W.BROWN) <br><br> *Abstract; column 2, lines 31 to 64; column 3, lines 43 to 67; figures* | 1,2,4, 5,6,9 | G 01 L 1/22 |
| Y | GB-A-2 051 373 (TOKYO ELECTRIC CO. LTD) <br> *Abstract; page 1, lines 83 to 126; page 2, lines 1 to 86; figures* | 1,2,4, 5,6,9 | |
| Y | US-A-3 445 800 (C.P.AMBULOS et al.) <br> *Abstract; column 2, lines 58 to 71; column 3, lines 12 to 23; figures* | 1,5 | |
| A | US-A-3 599 139 (M.E.LOW) <br> *Abstract; claims; figures* | 1,5 | TECHNICAL FIELDS SEARCHED (Int. Cl. ³) <br><br> G 01 L 1 <br> G 01 B 7 |
| A | US-A-3 863 192 (I.R.GREY) <br><br> *Abstract; column 3, lines 5 to 39; column 5, lines 36 to 55; figures* | 1,3,5, 7 | |
| A | US-A-3 639 875 (G.A.BREWER) <br> *Abstract; column 1, lines 54 to 75; column 2, lines 1 to 55; figures* | 1,4,5 | |

The present search report has been drawn up for all claims

| Place of search THE HAGUE | Date of completion of the search 23-09-1982 | Examiner VAN ASSCHE P.O. |
|---|---|---|